# EUROPEAN PATENT APPLICATION

(11) **EP 4 640 650 A1**
(43) Date of publication of application: **29.10.2025**
(21) Application number: 23907045.1
(22) Date of filing: 19.12.2023
(51) Int. Cl.: C03C 27/12

(54) **INTERMEDIATE FILM FOR LAMINATED GLASS, AND LAMINATED GLASS**

(30) Priority: 20.12.2022 JP 2022203704
(71) Applicant: SEKISUI CHEMICAL CO., LTD., Osaka-shi Osaka 530-8565 (JP)
(72) Inventor: OKAJIMA, Moyuru, Koka-shi, Shiga 528-8585 (JP); TAKAI, Minako, Koka-shi, Shiga 528-8585 (JP); SUZUKI, Yuuki, Koka-shi, Shiga 528-8585 (JP)
(74) Representative: Ter Meer Steinmeister & Partner
(86) International application number: PCT/JP2023/045506
(87) International publication number: WO 2024/135685

(57) **Abstract**

An interlayer film for laminated glass of the present invention contains a thermoplastic resin and a dispersant, wherein the dispersant is unevenly distributed in such a manner that its concentration is low in an outer surface of the interlayer film for laminated glass. According to the present invention, the interlayer film for laminated glass capable of preventing, even when the water content of peripheral portion of a laminated glass increases to about 1.5%, a decrease in pummel value so that separation between a glass plate and the interlayer film is prevented and the function of the laminated glass is successfully maintained can be provided.

## Description

### Technical Field

The present invention relates to an interlayer film for laminated glass and a laminated glass.

### Background Art

Laminated glass is safe because even when it is broken by an external impact, glass fragments are less likely to scatter. For this reason, laminated glass is widely used as window glass for various vehicles such as cars and for buildings and others. A widely-known laminated glass is one obtained by integrating a pair of glass plates with an interlayer film for laminated glass interposed between them and containing a resin component such as a polyvinyl acetal resin.

When the adhesive force between a glass plate and an interlayer film of a laminated glass is weak, the glass plate broken by impact is separated from the interlayer film so that glass fragments scatter. When the adhesive force is strong, the glass plate and the interlayer film are broken at the same time so that penetration occurs. Therefore, it is known that the adhesive force needs to be adjusted to fall within an appropriate range in order to prevent separation between the glass plate and the interlayer film and the occurrence of penetration when the laminated glass is subjected to impact (see, for example, PTL1).

It should be noted that the adhesive force of a laminated glass is generally evaluated by a pummel value, and resistance to penetration (i.e., penetration resistance) is generally evaluated by a falling ball test. In the falling ball test, a steel ball is dropped from a predetermined height to evaluate penetration resistance on the basis of whether or not the steel ball penetrates a laminated glass.

### Citation List

### Patent Literature

PTL1: WO2020/145322

### Summary of Invention

### Technical Problem

However, the water content of a laminated glass may increase depending on the duration of use or use environment. For example, when the water content increases to about 1.5%, there is a problem that a pummel value decreases and a glass plate is likely to separate from an interlayer film.

It is therefore an object of the present invention to prevent a decrease in pummel value when the water content of a laminated glass increases to about 1.5% so that separation of a glass plate from an interlayer film is prevented and the function of the laminated glass is successfully maintained.

### Solution to Problem

The present inventors have intensively studied and, as a result, have found that the above object can be achieved by using an interlayer film for laminated glass containing a thermoplastic resin and a dispersant, wherein the dispersant is unevenly distributed in such a manner that its concentration is low in an outer surface of the interlayer film for laminated glass. This finding has led to the completion of the present invention described below.

Specifically, the present invention relates to the following [1] to [13].
[1] An interlayer film for laminated glass, containing a thermoplastic resin and a dispersant, the dispersant being unevenly distributed in such a manner that its concentration is low in an outer surface of the interlayer film for laminated glass.
[2] The interlayer film for laminated glass according to the above [1], which has a region having a higher dispersant content than the outer surface.
[3] The interlayer film for laminated glass according to the above [1] or [2], wherein a difference between a content of the dispersant in the region having a higher dispersant content than the outer surface and a content of the dispersant in the outer surface is 0.005 mass% or more and 5 mass% or less.
[4] The interlayer film for laminated glass according to any one of the above [1] to [3], wherein the dispersant contains at least one selected from the group consisting of an acrylic dispersant, an amine-based dispersant, and a urethane-based dispersant.
[5] The interlayer film for laminated glass according to any one of the above [1] to [4], wherein the dispersant contains two or more dispersants.
[6] The interlayer film for laminated glass according to any one of the above [1] to [5], wherein the dispersant contains a first dispersant and a second dispersant having a lower molecular weight than the first dispersant, and wherein a mass-based ratio of a content of the second dispersant to a content of the first dispersant is 1/100 or more and 30/100 or less.
[7] The interlayer film for laminated glass according to any one of the above [1] to [6], wherein the dispersant contains a dispersant having a molecular weight of 3000 or more.
[8] The interlayer film for laminated glass according to any one of the above [1] to [7], wherein a content of the dispersant is 0.001 mass% or more and 1 mass% or less.
[9] The interlayer film for laminated glass according to any one of the above [1] to [8], which further contains a colorant.
[10] The interlayer film for laminated glass according to any one of the above [2] to [9], wherein the region having a higher dispersant content than the outer surface contains a colorant.
[11] The interlayer film for laminated glass according to the above [10], wherein a mass-based ratio of a content of the dispersant to a content of the colorant in the region having a higher dispersant content than the outer surface is 20/100 or more and 100/100 or less.
[12] The interlayer film for laminated glass according to any one of the above [1] to [11], which contains at least one metallic salt selected from the group consisting of an alkali metal salt, an alkaline-earth metal salt, and a magnesium salt.
[13] A laminated glass including a first laminated glass member, a second laminated glass member, and the interlayer film for laminated glass according to any one of the above [1] to [12], wherein the interlayer film for laminated glass is interposed between the first laminated glass member and the second laminated glass member.

### Advantageous Effects of Invention

The present invention makes it possible to provide an interlayer film for laminated glass which is capable of, even when the water content of peripheral portion of a laminated glass increases to about 1.5%, preventing a decrease in pummel value so that separation between a glass plate and the interlayer film is prevented and the function of the laminated glass is successfully maintained, and a laminated glass including such an interlayer film for laminated glass.

### Brief Description of Drawings

[Fig. 1] Fig. 1 is a sectional view schematically showing an embodiment of an interlayer film for laminated glass according to the present invention.
[Fig. 2] Fig. 2 is a sectional view schematically showing another embodiment of the interlayer film for laminated glass according to the present invention.
[Fig. 3] Fig. 3 is a sectional view schematically showing another embodiment of the interlayer film for laminated glass according to the present invention.
[Fig. 4] Fig. 4 is a sectional view schematically showing another embodiment of the interlayer film for laminated glass according to the present invention.
[Fig. 5] Fig. 5 is a sectional view schematically showing another embodiment of the interlayer film for laminated glass according to the present invention.
[Fig. 6] Fig. 6 is a sectional view schematically showing an interlayer film for laminated glass of each comparative example.

### Description of Embodiments

Hereinbelow, the present invention will be described in detail with reference to embodiments.

### [Interlayer film for laminated glass]

An interlayer film for laminated glass of the present invention (hereinafter sometimes simply referred to as "interlayer film") contains a thermoplastic resin and a dispersant, and the dispersant is unevenly distributed in such a manner that its concentration is low in an outer surface of the interlayer film for laminated glass.

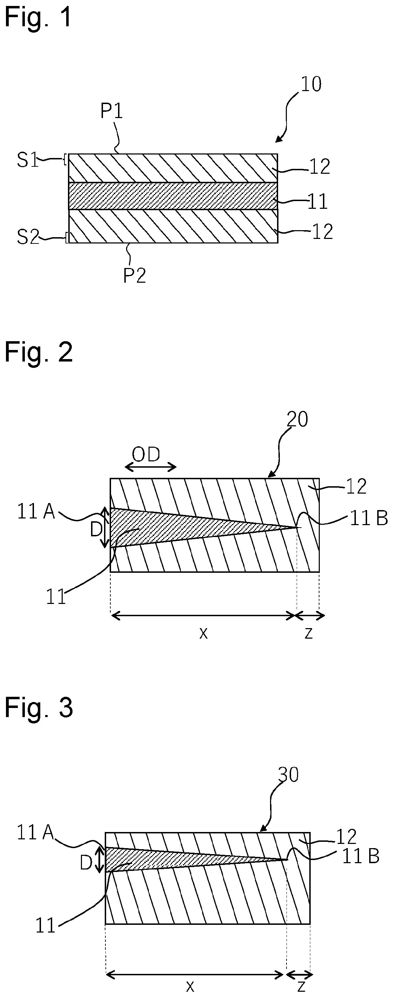

Shown in Fig. 1 is a schematic sectional view of an embodiment of the interlayer film of the present invention. It should be noted that the contents of the present invention are not limited by the drawings.

An interlayer film 10 shown in Fig. 1 contains a thermoplastic resin as a matrix, and a dispersant is dispersed in the matrix. The interlayer film 10 has a region 11 having a higher dispersant content than an outer surface and regions 12 located on both sides of the region 11 and having a lower dispersant content than the region 11. It should be noted that the region 11 having a higher dispersant content than an outer surface is sometimes referred to as "region 11 having a high dispersant content" or "region 11". Further, the region 12 having a lower dispersant content than the region 11 is sometimes referred to as "region 12 having a low dispersant content" or "region 12".

One of the regions 12 is a region including one outer surface S1 of the interlayer film 10, and the other region 12 is a region including the other outer surface S2 of the interlayer film 10. The outer surfaces S1 and S2 serve as portions to be bonded to laminated glass members. It should be noted that although described later in detail, the region 12 corresponds to a surface layer that will be described later and the region 11 corresponds to a first middle layer that will be described later.

In other words, the content of the dispersant in the region 12 of the interlayer film 10 is adjusted to be lower than that in the region 11. It should be noted that the region 12 may not contain the dispersant.

As described above, the dispersant is unevenly distributed in such a manner that its concentration is low in the outer surface of the interlayer film 10. More specifically, the interlayer film 10 has a region 11 having a dispersant content higher than that of each of both the outer surfaces (i.e., than the dispersant content of the outer surface S1 and the dispersant content of the outer surface S2).

It should be noted that the outer surface herein means a region of 10 µm from the outermost surface of the interlayer film for laminated glass in its thickness direction. That is, the outer surface S1 is a region of 10 µm from one outermost surface P1 of the interlayer film for laminated glass 10 in its thickness direction, and the outer surface S2 is a region of 10 µm from the other outermost surface P2 of the interlayer film for laminated glass 10 in its thickness direction.

As described above, the dispersant contained in the interlayer film 10 of the present invention is unevenly distributed in such a manner that its concentration is low in the outer surface. Therefore, a laminated glass produced using the interlayer film 10 is capable of preventing a decrease in pummel value even when its water content increases to about 1.5%. As a result, separation between a glass plate and the interlayer film is prevented so that the function of the laminated glass can successfully be maintained.

The region 11 having a high dispersant content is a region containing at least a thermoplastic resin and a dispersant. The content of the dispersant in the region 11 having a high dispersant content is preferably 0.005 mass% or more and 5 mass% or less, more preferably 0.008 mass% or more and 2 mass% or less, even more preferably 0.01 mass% or more and 1 mass% or less. When the region 11 contains a particulate substance such as a pigment or another colorant, the particulate substance or the colorant is likely to be appropriately dispersed by setting the content of the dispersant in the region 11 to be equal to or more than the above lower limit. By setting the content of the dispersant in the region 11 to be equal to or less than the above upper limit, the pummel value of a laminated glass is likely to be adjusted to an appropriate value without extremely reducing the pummel value.

Although described later in detail, the region 11 preferably contains a colorant. The colorant is appropriately dispersed by the dispersant, which makes it possible to impart aesthetic quality to the interlayer film.

The outer surface (each of S1 and S2) of the interlayer film for laminated glass is a region containing at least a thermoplastic resin and may optionally contain a dispersant, but preferably contain no dispersant from the viewpoint of preventing a decrease in the pummel value of a laminated glass. The content of the dispersant in the outer surface (each of S1 and S2) is preferably 0.1 mass% or less, more preferably 0.01 mass% or less, even more preferably 0.001 mass% or less, still even more preferably 0 mass%.

It should be noted that the region 12 including the outer surface is usually formed of a single resin composition, and therefore a portion corresponding to the outer surface and a portion other than the outer surface in the region 12 have the same composition. Therefore, the content of the dispersant in the outer surface (each of S1 and S2) is the same as that in the region 12.

Therefore, the content of the dispersant in the region 12 is preferably 0.1 mass% or less, more preferably 0.01 mass% or less, even more preferably 0.001 mass% or less, still even more preferably 0 mass%.

A difference between a content X1 of the dispersant in the region 11 having a high dispersant content and a content X2 of the dispersant in the outer surface (X1 - X2) is preferably 0.005 mass% or more and 5 mass% or less, more preferably 0.006 mass% or more and 2 mass% or less, even more preferably 0.008 mass% or more and 0.1 mass% or less. X1 - X2 is preferably satisfied by each of both the outer surfaces S1 and S2. When X1 - X2 is within the above range, a decrease in the pummel value of a laminated glass is likely to be prevented.

The content of the dispersant in the interlayer film is not limited, but is preferably 0.001 mass% or more and 1 mass% or less, more preferably 0.005 mass% or more and 0.1 mass% or less.

The thickness of the region 11 having a high dispersant content is not limited, but is preferably 0.001 mm or more and 2 mm or less, more preferably 0.005 mm or more and 1.5 mm or less, even more preferably 0.01 mm or more and 1 mm or less.

The thickness of each of the regions 12 having a low dispersant content is not limited, but is preferably 0.0001 mm or more and 1 mm or less, more preferably 0.002 mm or more and 0.5 mm or less, even more preferably 0.01 mm or more and 0.1 mm or less. It should be noted that the thicknesses of the two regions 12 may be the same or different from each other.

The thickness of the interlayer film 10 is preferably 0.2 mm or more and 2.0 mm or less. When having a thickness of 0.2 mm or more, the interlayer film is likely to have excellent adhesiveness to a laminated glass member. Further, when the interlayer film has a thickness of 2.0 mm or less, it is possible to prevent a laminated glass from becoming unnecessarily thick. The thickness of the interlayer film is more preferably 0.25 mm or more and 1.0 mm or less, even more preferably 0.3 mm or more and 0.9 mm or less. The thickness of the interlayer film may change as in the case of an interlayer film having a wedge shape. In such a case, the thickness of the interlayer film means the thickness of a portion having the smallest thickness (the thinnest portion). It should be noted that the wedge shape is a shape whose thickness gradually increases (or decreases) from one end toward the other end.

The interlayer film for laminated glass 10 of the present invention may have either a single-layer structure or a multi-layer structure. Specifically, as shown in Fig. 1, the interlayer film 10 may be produced to have a single layer by forming a region 11 having a high dispersant content and regions 12 having a low dispersant content, or the interlayer film 10 may be formed to have multiple layers by laminating a plurality of resin layers. Among them, from the viewpoint of ease of production of the interlayer film 10 or the viewpoint of adjusting the region 11 to have a desired shape as necessary, the interlayer film 10 preferably has a multi-layer structure.

For example, the interlayer film 10 shown in Fig. 1 can be produced by forming a first middle layer as the region 11 having a high dispersant content and forming surface layers as the regions 12 having a low dispersant content. That is, the interlayer film 10 shown in Fig. 1 is preferably constituted from a first middle layer (region 11) and surface layers (regions 12) provided on both sides of the first middle layer.

The interlayer film 10 shown in Fig. 1 is preferably produced by coextrusion using a resin composition for forming a region 11 and a resin composition for forming a region 12.

When having a multi-layer structure, the interlayer film may be constituted from two or more layers, three or more layers, or five or more layers, but is preferably constituted from three or more and seven or less layers and is more preferably constituted from three or more and five or less layers.

Shown in Fig. 2 is a schematic sectional view of another embodiment of the interlayer film for laminated glass.

An interlayer film 20 shown in Fig. 2 includes a region 12 having a low dispersant content and a region 11 having a high dispersant content, and the region 11 is disposed inside the region 12. As shown in Fig. 2, in the interlayer film 20, the region 11 is provided in part of the interlayer film 20.

In a direction OD (in Fig. 2, in a left-right direction) perpendicular to the thickness direction of the interlayer film 20, the thickness of the region 11 decreases from one end 11A of the region 11 toward the other end 11B on the side opposite to the one end 11A. The thickness may continuously and gradually decrease, which allows the region 11 to have a tapered shape along the direction OD. The gradient of the thickness may or may not be constant in a width direction. Further, the region 11 may partially have a region having a constant thickness (a region whose thickness does not increase or decrease). It should be noted that in Fig. 2, a portion where the region 11 has the largest thickness is positioned at the left end of the interlayer film 20, but the present invention is not limited to such a mode. That is, the portion where the region 11 has the largest thickness may not be positioned at the end of the interlayer film 20.

It should be noted that the direction OD is typically a transverse direction (TD) of the interlayer film but may be a machine direction (MD) perpendicular to TD or a direction other than MD or TD.

The tip 11B of the taper-shaped region 11 is positioned inside the interlayer film 20. Therefore, the interlayer film 20 is constituted from a widthwise area x having the region 11 and a widthwise area z not having the region 11.

In the interlayer film 20, the widthwise area x is an area where the regions 12 are present on both sides of the region 11, and the widthwise area z is an area all of which is formed from the region 12.

In other words, the widthwise area x of the interlayer film 20 is constituted from a region 11 (first middle layer) and regions 12 (surface layers) provided on both sides of the region 11. The widthwise area z of the interlayer film 20 is constituted from only the region 12.

The width (i.e., the distance from the one end 11A to the other end 11B) of the region 11 shown in Fig. 2 varies depending on the intended use and is freely set without any limitation, but is, for example, 10 mm or more and 5 m or less, preferably 20 mm or more and 3 m or less, more preferably 50 mm or more and 1 m or less.

The taper-shaped region 11 shown in Fig. 2 has a triangular cross-section. However, the tip 11B of the region 11 may have a certain thickness, and in this case, the region 11 has a trapezoidal cross-section.

A thickness D of thickest portion of the taper-shaped region 11 is preferably 30 µm or more and 300 µm or less, more preferably 70 µm or more and 200 µm or less, even more preferably 100 µm or more and 150 µm or less.

As will be described later, the region 11 preferably contains a colorant. In this case, the concentration of the colorant in the width direction of a laminated glass can be controlled from low to high, thereby making it possible to give gradation to the interlayer film 20.

The taper-shaped region 11 in the interlayer film 20 shown in Fig. 2 is symmetric about a straight line extending from the midpoint of the interlayer film 20 in the thickness direction so as to be perpendicular to the thickness direction (hereinafter also referred to as "centerline of thickness of the interlayer film"), but the present invention is not limited to such a mode.

For example, the position of the taper-shaped region 11 present in an interlayer film 30 shown in Fig. 3 is different from that in the interlayer film 20 shown in Fig. 2. That is, as shown in Fig. 3, the taper-shaped region 11 may be formed to deviate from the centerline of thickness of the interlayer film.

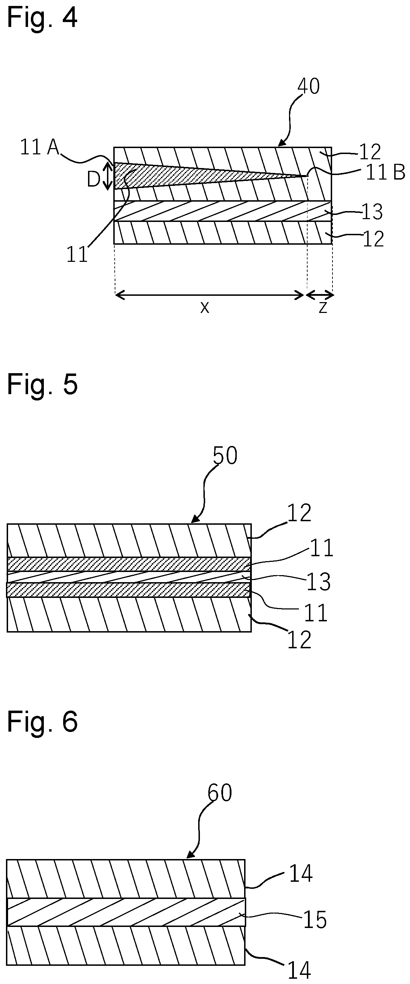

The interlayer film of the present invention may be an interlayer film 40 shown in Fig. 4 as still another embodiment, which is formed by further providing a second middle layer 13 in the interlayer film 30 shown in Fig. 3.

By providing such a second middle layer 13, various performances can be imparted to the interlayer film. For example, the second middle layer 13 can impart sound insulation performance to the interlayer film 40 by adjusting the amount of a plasticizer and using a polyvinyl acetal resin as a resin to appropriately adjust the amount of hydroxyl groups.

The thickness of the second middle layer 13 is not limited and may appropriately be adjusted, but is preferably 30 µm or more and 300 µm or less, more preferably 50 µm or more and 200 µm or less, even more preferably 70 µm or more and 150 µm or less.

The second middle layer may or may not contain a dispersant, but it is preferred that the dispersant content thereof is preferably smaller than that of the first middle layer (region 11) or no dispersant is contained. Further, the second middle layer may or may not contain a colorant, but preferably contains no colorant.

In the interlayer film 40, a widthwise area x having the region 11 is constituted from five layers including a region 12 (surface layer), a region 11 (first middle layer), a region 12, a second middle layer, and a region 12 (surface layer) in this order. Further, in the interlayer film 40, a widthwise area z not having the region 11 is constituted from three layers including a region 12 (surface layer), a second middle layer, and a region 12 (surface layer) in this order.

The interlayer film of the present invention may be one shown in Fig. 5 as still another embodiment, which has two regions 11 having a high dispersant content. An interlayer film 50 shown in Fig. 5 includes a region 12 (surface layer), a region 11 (first middle layer), a second middle layer 13, a region 11 (first middle layer), and a region 12 (surface layer) in this order.

When two regions 11 are provided in this way, the interlayer film can complicatedly be colored by, for example, adding different colorants to these regions 11, respectively. Further, by providing the second middle layer 13, sound insulation performance can be imparted to the interlayer film, if necessary.

It should be noted that the thickness of each of the region 12 (surface layer), the region 11 (first middle layer), and the second middle layer is as described above. The thicknesses of the two regions 11 (first middle layers) may be the same or different from each other. The thicknesses of the two regions 12 (surface layers) may be the same or different from each other.

In each of the interlayer films shown in Fig. 2 to Fig. 5, the dispersant is unevenly distributed in such a manner that its concentration is low in the outer surface as in the case of the interlayer film shown in Fig. 1. Therefore, a laminated glass produced using such an interlayer film is capable of preventing a decrease in pummel value even when its water content increases to about 1.5%. As a result, separation between a glass plate and the interlayer film is prevented so that the function of the laminated glass can successfully be maintained. It should be noted that the dispersant contents, thicknesses, etc. of the outer surface, the region 11, the region 12, and the interlayer film described with reference to the interlayer film 10 shown in Fig. 1 can be applied also to those of each of the interlayer films shown in Fig. 2 to Fig. 5.

### <Thermoplastic resin>

The interlayer film of the present invention contains a thermoplastic resin. Since containing a thermoplastic resin, the interlayer film is likely to serve as an adhesive layer and has excellent adhesiveness to a laminated glass member.

More specifically, each of the region 12 (surface layer), the region 11 (first middle layer), and the second middle layer described above contains a thermoplastic resin.

Examples of the thermoplastic resin include, but are not limited to, a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. The use of such resins makes it easy to achieve adhesiveness to a laminated glass member.

The interlayer film of the present invention may use one thermoplastic resin singly or two or more thermoplastic resins in combination. It should be noted that when two or more thermoplastic resins are used in combination, one layer in the interlayer film may contain two or more thermoplastic resins, or different layers in the interlayer film may respectively contain different thermoplastic resins.

Among them, at least one selected from the group consisting of a polyvinyl acetal resin and an ethylene-vinyl acetate copolymer resin is preferred. Particularly, a polyvinyl acetal resin is more preferred from the viewpoint that it exhibits excellent adhesiveness to glass used in combination with a plasticizer. Therefore, the resin contained in each of the above-described layers is also preferably at least one selected from the group consisting of a polyvinyl acetal resin and an ethylene-vinyl acetate copolymer resin, more preferably a polyvinyl acetal resin.

### (Polyvinyl acetal resin)

The polyvinyl acetal resin is not limited as long as it is a polyvinyl acetal resin obtained by acetalizing polyvinyl alcohol (PVA) with an aldehyde.

The aldehyde is not limited, but generally, an aldehyde having 1 to 10 carbon atoms is suitably used. Examples of the aldehyde having 1 to 10 carbon atoms include, but are not limited to, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde.

These aldehydes may be used singly or in combination of two or more of them.

Among them, n-butyraldehyde, n-hexylaldehyde, and n-valeraldehyde are preferred, and n-butyraldehyde is more preferred. Therefore, a polyvinyl butyral resin is suitable as the polyvinyl acetal resin.

Polyvinyl alcohol (PVA) is obtained by, for example, saponifying a polyvinyl ester such as polyvinyl acetate. The degree of saponification of polyvinyl alcohol is generally 70 to 99.9 mol%. As the polyvinyl acetal resin, one polyvinyl acetal resin may be used singly or two or more polyvinyl acetal resins may be used in combination.

The average degree of polymerization of PVA is preferably 200 or more, more preferably 500 or more, even more preferably 1000 or more, still even more preferably 1500 or more. When the average degree of polymerization is equal to or more than the above lower limit, the penetration resistance of a laminated glass increases. Further, the average degree of polymerization of PVA is preferably 5000 or less, more preferably 4000 or less, even more preferably 3500 or less, still even more preferably 2500 or less.

It should be noted that the average degree of polymerization of polyvinyl alcohol is determined by a method complying with JIS K6726 "Testing methods for polyvinyl alcohol".

The amount of hydroxyl groups in the polyvinyl acetal resin is preferably 15 mol% or more and 38 mol% or less. When the amount of hydroxyl groups is 15 mol% or more, excellent adhesiveness is likely to be achieved, and a laminated glass is likely to have excellent penetration resistance, etc. When the amount of hydroxyl groups is 38 mol% or less, a laminated glass is prevented from becoming excessively rigid. From the viewpoint of adhesiveness to a glass plate, the amount of hydroxyl groups is more preferably 20 mol% or more, even more preferably 25 mol% or more, still even more preferably 30 mol% or more. Further, the amount of hydroxyl groups is more preferably 35 mol% or less, even more preferably 33 mol% or less.

Also when a polyvinyl butyral resin is used as the polyvinyl acetal resin, from the same viewpoint, the amount of hydroxyl groups is preferably 15 mol% or more, more preferably 20 mol% or more, even more preferably 25 mol% or more, still even more preferably 30 mol% or more. Further, the amount of hydroxyl groups is preferably 38 mol% or less, more preferably 35 mol% or less, even more preferably 33 mol% or less.

The amount of hydroxyl groups in the polyvinyl acetal resin is a value that expresses, in percentage terms, a mole fraction determined by dividing the amount of ethylene groups to which a hydroxyl group is bonded by the total amount of ethylene groups in the main chain. The amount of ethylene groups to which a hydroxyl group is bonded can be measured in accordance with, for example, JIS K6728 "Testing methods for polyvinyl butyral".

When the region 12 (surface layer), the region 11 (first middle layer), and the second middle layer contain a polyvinyl acetal resin, the amount of hydroxyl groups in the polyvinyl acetal resin may be adjusted as described above.

It should be noted that when the sound insulation performance of the interlayer film needs to be enhanced, the amount of hydroxyl groups in a polyvinyl acetal resin contained in the second middle layer is preferably 20 mol% or more, more preferably 22 mol% or more and is preferably 30 mol% or less, more preferably 28 mol% or less, even more preferably 25 mol% or less. When the amount of hydroxyl groups in the polyvinyl acetal resin is equal to or more than the above lower limit, high reaction efficiency and excellent productivity are achieved, and when the amount of hydroxyl groups is equal to or less than the above upper limit, sound insulation performance is enhanced.

The degree of acetalization of the polyvinyl acetal resin is preferably 47 mol% or more and 85 mol% or less. The degree of acetalization is more preferably 55 mol% or more, even more preferably 60 mol% or more and is more preferably 80 mol% or less, even more preferably 75 mol% or less.

It should be noted that when the acetal group is a butyral group, that is, when the polyvinyl acetal resin is a polyvinyl butyral resin, the degree of acetalization means the degree of butyralization.

The degree of acetalization is a value that expresses, in percentage terms, a mole fraction determined by dividing, by the total amount of ethylene groups in the main chain, a value determined by subtracting the amount of ethylene groups to which a hydroxyl group is bonded and the amount of ethylene groups to which an acetyl group is bonded from the total amount of ethylene groups in the main chain. The degree of acetalization (degree of butyralization) may be calculated from a result measured by a method complying with, for example, JIS K6728 "Testing methods for polyvinyl butyral".

When the region 12 (surface layer), the region 11 (first middle layer), and the second middle layer contain a polyvinyl acetal resin such as a polyvinyl butyral resin, the degree of acetalization thereof may be adjusted as described above.

The degree of acetylation of the polyvinyl acetal resin is preferably 30 mol% or less, more preferably 20 mol% or less, even more preferably 10 mol% or less, still even more preferably 2 mol% or less. When the degree of acetylation is equal to or less than the above upper limit, the interlayer film and a laminated glass have high moisture resistance. The degree of acetylation is not limited, but is preferably 0.01 mol% or more, more preferably 0.1 mol% or more.

The degree of acetylation is a value that expresses, in percentage terms, a mole fraction determined by dividing the amount of ethylene groups to which an acetyl group is bonded by the total amount of ethylene groups in the main chain. The amount of ethylene groups to which an acetyl group is bonded can be measured in accordance with, for example, JIS K6728 "Testing methods for polyvinyl butyral".

When the region 12 (surface layer), the region 11 (first middle layer), and the second middle layer contain a polyvinyl acetal resin such as a polyvinyl butyral resin, the degree of acetylation thereof may be adjusted as described above.

### (Ethylene-vinyl acetate copolymer resin)

The ethylene-vinyl acetate copolymer resin may be a non-cross-linked ethylene-vinyl acetate copolymer resin or a high-temperature cross-linked ethylene-vinyl acetate copolymer resin. Further, the ethylene-vinyl acetate copolymer resin may be an ethylene-vinyl acetate modified resin such as a saponified ethylene-vinyl acetate copolymer or a hydrolysate of ethylene-vinyl acetate.

The vinyl acetate content of the ethylene-vinyl acetate copolymer resin as measured in accordance with JIS K 6730 "Testing methods for ethylene/vinyl acetate copolymer materials" or JIS K 6924-2: 1997 is preferably 10 to 50 mass%, more preferably 20 to 40 mass%. When the vinyl acetate content is equal to or more than the above lower limit, adhesiveness to glass is enhanced, and a laminated glass is likely to have excellent penetration resistance. Further, when the vinyl acetate content is equal to or less than the above upper limit, the interlayer film has high rupture strength so that a laminated glass has excellent impact resistance.

### (Ionomer resin)

The ionomer resin is not limited, and various ionomer resins may be used. Specific examples of the ionomer resin include an ethylene-based ionomer, a styrene-based ionomer, a perfluorocarbon-based ionomer, a telechelic ionomer, and a polyurethane ionomer. Among them, an ethylene-based ionomer is preferred from the viewpoint of enhancing the mechanical strength, durability, and transparency of a laminated glass and the viewpoint of excellent adhesiveness to glass.

As the ethylene-based ionomer, an ionomer of an ethylene-unsaturated carboxylic acid copolymer is suitably used for its excellent transparency and toughness. The ethylene-unsaturated carboxylic acid copolymer is a copolymer having at least a structural unit derived from ethylene and a structural unit derived from an unsaturated carboxylic acid, and may have a structural unit derived from another monomer.

Examples of the unsaturated carboxylic acid include acrylic acid, methacrylic acid, and maleic acid, and acrylic acid and methacrylic acid are preferred and methacrylic acid is particularly preferred. Examples of the another monomer include an acrylic acid ester, a methacrylic acid ester, and 1-butene.

The ethylene-unsaturated carboxylic acid copolymer preferably has 75 to 99 mol% of an ethylene-derived structural unit and 1 to 25 mol% of an unsaturated carboxylic acid - derived structural unit when the total amount of structural units that the copolymer has is taken as 100 mol%.

The ionomer of an ethylene-unsaturated carboxylic acid copolymer is an ionomer resin obtained by neutralizing or cross-linking, with a metallic ion, at least some of carboxyl groups that the ethylene-unsaturated carboxylic acid copolymer has, and the degree of neutralization of the carboxyl groups is usually 1 to 90%, preferably 5 to 85%.

Examples of an ion source in the ionomer resin include alkali metals such as lithium, sodium, potassium, rubidium, and cesium and polyvalent metals such as magnesium, calcium, and zinc, and sodium and zinc are preferred.

A method for producing the ionomer resin is not limited, and the ionomer resin can be produced by a conventionally-known production method. For example, when an ionomer of an ethylene-unsaturated carboxylic acid copolymer is used as the ionomer resin, an ethylene-unsaturated carboxylic acid copolymer is produced by, for example, radical copolymerization between ethylene and an unsaturated carboxylic acid under high temperature and pressure. Then, the ethylene-unsaturated carboxylic acid copolymer is reacted with a metal compound containing the above-described ion source. In this way, an ionomer of an ethylene-unsaturated carboxylic acid copolymer can be produced.

### (Polyurethane resin)

Examples of the polyurethane resin include a polyurethane obtained by reacting an isocyanate compound and a diol compound and a polyurethane obtained by reacting an isocyanate compound, a diol compound, and a chain extender such as a polyamine. The polyurethane resin may contain a sulfur atom. In this case, part or all of the diol may be selected from the group consisting of a polythiol and a sulfur-containing polyol. The polyurethane resin can enhance adhesiveness to organic glass. Therefore, the polyurethane resin is suitably used when a glass plate is made of organic glass.

### (Thermoplastic elastomer)

Examples of the thermoplastic elastomer include a styrene-based thermoplastic elastomer and an aliphatic polyolefin. The styrene-based thermoplastic elastomer is not limited, and a publicly-known one can be used. The styrene-based thermoplastic elastomer generally has a styrene-monomer polymer block as a hard segment and a conjugated diene compound polymer block or a hydrogenated block thereof as a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadienestyrene triblock copolymer, and hydrogenated products thereof.

The aliphatic polyolefin may be a saturated aliphatic polyolefin or an unsaturated aliphatic polyolefin. The aliphatic polyolefin may be a polyolefin having a linear olefin as a monomer or a polyolefin having a cyclic olefin as a monomer. From the viewpoint of effectively enhancing the storage stability and sound insulation performance of the interlayer film, the aliphatic polyolefin is preferably a saturated aliphatic polyolefin.

Examples of a material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinyl cyclohexane.

The resin constituting each layer (each region) in the interlayer film is preferably a thermoplastic resin and may appropriately be selected from among the resins mentioned above. The resins constituting respective layers (respective regions) may be different from each other but are preferably the same. Therefore, when the interlayer film has a plurality of layers, all the layers are preferably constituted from a polyvinyl acetal resin or an ethylene-vinyl acetate copolymer resin and are more preferably constituted from a polyvinyl acetal resin.

### <Plasticizer>

The interlayer film may contain a plasticizer in addition to the thermoplastic resin. When containing a plasticizer, the interlayer film becomes more flexible, which as a result enhances the flexibility and penetration resistance of a laminated glass. Further, the interlayer film becomes possible to exhibit high adhesiveness to a glass plate. Addition of a plasticizer is particularly effective when a polyvinyl acetal resin is used as the thermoplastic resin. Therefore, each of the layers (each of the regions) more preferably contains a polyvinyl acetal resin and a plasticizer.

Examples of the plasticizer include organic ester plasticizers such as a monobasic organic acid ester and a polybasic organic acid ester and phosphorus plasticizers such as an organic phosphate plasticizer and an organic phosphite plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphoric acid ester and an adipic acid ester, and a mixed-type adipic acid ester. Examples of the mixed-type adipic acid ester include adipic acid esters produced from two or more alcohols selected from the group consisting of alkyl alcohols having 4 to 9 carbon atoms and cyclic alcohols having 4 to 9 carbon atoms.

Among the above plasticizers, triethylene glycol-di-2-ethylhexanoate (3GO) is particularly suitably used.

The content of the plasticizer in the interlayer film is not limited, but is preferably 10 parts by mass or more and 100 parts by mass or less per 100 parts by mass of the thermoplastic resin. When the content of the plasticizer is 10 parts by mass or more, a laminated glass has appropriate flexibility and therefore has excellent penetration resistance etc. Further, when the content of the plasticizer is 100 parts by mass or less, separation of the plasticizer from the interlayer film is prevented. The content of the plasticizer is more preferably 20 parts by mass or more, even more preferably 30 parts by mass or more, still even more preferably 35 parts by mass or more and is more preferably 70 parts by mass or less, even more preferably 60 parts by mass or less, still even more preferably 55 parts by mass or less.

The same applies to each of the layers constituting the interlayer film. That is, the content of the plasticizer in each of the layers (each of the regions) is preferably 10 parts by mass or more, more preferably 20 parts by mass or more, even more preferably 30 parts by mass or more, still even more preferably 35 parts by mass or more and is preferably 100 parts by mass or less, more preferably 70 parts by mass or less, even more preferably 60 parts by mass or less, still even more preferably 50 parts by mass or less, per 100 parts by mass of the thermoplastic resin.

It should be noted that when the sound insulation performance of the interlayer film needs to be enhanced, the content of the plasticizer in the second middle layer is preferably larger than those in the other layers. In this case, the content of the plasticizer in the second middle layer is preferably 30 parts by mass or more, more preferably 45 parts by mass or more, even more preferably 55 parts by mass or more and is preferably 100 parts by mass or less, more preferably 90 parts by mass or less, even more preferably 85 parts by mass or less, per 100 parts by mass of the thermoplastic resin.

The interlayer film contains, as its main component, a thermoplastic resin and a plasticizer. The total amount of the thermoplastic resin and the plasticizer contained in the interlayer film is usually 70 mass% or more, preferably 80 mass% or more, more preferably 90 mass% or more and less than 100 mass% relative to the total amount of the interlayer film. When the total amount is less than 100 mass%, the interlayer film can contain an additive such as a colorant.

It should be noted that when a plurality of resin layers are provided, each of the layers (each of the regions) also contains, as its main component, a thermoplastic resin and a plasticizer. That is, the total amount of the thermoplastic resin and the plasticizer contained in each of the layers (each of the regions) is usually 70 mass% or more, preferably 80 mass% or more, more preferably 90 mass% or more and less than 100 mass% relative to the total amount of each of the layers.

### <Dispersant>

The interlayer film of the present invention contains a dispersant, and therefore when a particulate substance, such as a pigment, or another colorant is added to the interlayer film, the particulate substance or the colorant is likely to be appropriately dispersed in the interlayer film. The dispersant is contained in at least the region 11 (first middle layer). The region 12 (surface layer) may or may not contain a dispersant but preferably contains no dispersant. The second middle layer may or may not contain a dispersant but preferably contains no dispersant.

Examples of the dispersant usable in the present invention include an acrylic dispersant, an amine-based dispersant, a urethane-based dispersant, a polycarboxylic acid-based dispersant, a polyester-based dispersant, a phosphoric acid ester-based dispersant, and a polyether-based dispersant. Among them, an acrylic dispersant, an amine-based dispersant, a urethane-based dispersant, and a polycarboxylic acid-based dispersant are preferred. These dispersants may be used singly or in combination of two or more of them.

**In** the present invention, among the above dispersants, an acrylic dispersant, an amine-based dispersant, and a urethane-based dispersant are more preferred. When the interlayer film contains any one of an acrylic dispersant, an amine-based dispersant, and a urethane-based dispersant as a dispersant, a particulate substance or a colorant is likely to be appropriately dispersed in the interlayer film.

The dispersant may have a polar group such as an amino group, a carboxyl group, a sulfone group, a hydroxyl group, a phosphoric group, a group derived from a nitrogen-containing heterocycle such as pyridine, pyrimidine, or pyrazine, a salt of each of them, or a quaternary ammonium salt. The polar group is preferably an amino group.

The dispersant may be acidic, basic, or nonionic, but is preferably an acidic dispersant or a basic dispersant. Among them, a basic dispersant is preferred. Further, the dispersant is preferably a solvent-based or solvent-free dispersant.

The dispersant is preferably a polymer-based dispersant. Specifically, a dispersant having a molecular weight of, for example, 1500 or more, preferably 2500 or more, more preferably 3000 or more is preferably contained. When a dispersant having a certain molecular weight or more is used, the dispersant is likely to be compatible with the thermoplastic resin. Further, various particles such as a pigment are likely to be appropriately dispersed in the thermoplastic resin. The upper limit of molecular weight of the dispersant is not limited but may be, for example, 100,000 or less.

It should be noted that the molecular weight herein means a weight-average molecular weight and specifically means one measured by GPC.

The acrylic dispersant is a dispersant having a structural unit derived from an acrylic monomer such as (meth)acrylic acid or a (meth)acrylic acid ester. The acrylic dispersant may be a polymer-based dispersant as described above, that is, an acrylic polymer, and is preferably an acrylic block copolymer. Further, the acrylic dispersant preferably has a polar group and preferably becomes an acidic or basic dispersant by having a polar group.

The urethane-based dispersant may be a dispersant having a polyurethane structure with a plurality of urethane bonds. The urethane-based dispersant is preferably a polymer-based dispersant, preferably has a polar group, and preferably becomes an acidic or basic dispersant by having a polar group.

Examples of the amine-based dispersant include compounds each having, in its molecular structure, an amino group as a polar group as described above. Therefore, the above-described acrylic dispersant, urethane-based dispersant, and the like may be amine-based dispersants. Further, the amine-based dispersant may have a polyamine structure in its molecule. For example, the amine-based dispersant may be an alkenyl succinic acid imide-based dispersant obtained by further reacting an alkenyl succinic anhydride with a polyamine.

Examples of the polycarboxylic acid-based dispersant include a polycarboxylic acid and salts thereof. Specifically, a polycarboxylic acid salt of polyaminoamide is preferred. The polycarboxylic acid-based dispersant is preferably used in combination with at least any one of the above-described acrylic dispersant, amine-based dispersant, and urethane-based dispersant. When the polycarboxylic acid-based dispersant is used in combination with these dispersants, a colorant such as a pigment or another substance is more likely to be appropriately dispersed in the interlayer film.

From the viewpoint of dispersibility of a colorant such as a pigment or another substance, the interlayer film of the present invention may contain two or more dispersants. Specifically, the interlayer film may contain at least a first dispersant and a second dispersant different from the first dispersant. However, the interlayer film may not contain the second dispersant, that is, may contain only the first dispersant as a dispersant.

The first dispersant preferably has a larger molecular weight than the second dispersant. When the interlayer film contains two or more dispersants different in molecular weight from each other, a colorant such as a pigment or another substance is more likely to be appropriately dispersed in the interlayer film.

The molecular weight of the first dispersant is preferably 2000 or more and 100,000 or less, more preferably 2500 or more and 50,000 or less, even more preferably 3000 or more and 15,000 or less. The molecular weight of the second dispersant is preferably 1500 or more and 20,000 or less, more preferably 2000 or more and 8000 or less, even more preferably 2000 or more and less than 4500.

When the interlayer film contains two or more dispersants, from the viewpoint of dispersibility of a colorant such as a pigment or another substance, the first dispersant is preferably any one of an acrylic dispersant, an amine-based dispersant, and a urethane-based dispersant, and the second dispersant is preferably a polycarboxylic acid-based dispersant.

It should be note that it is preferred that in the interlayer film, the first dispersant has the highest molecular weight and the second dispersant has the lowest molecular weight among all the dispersants contained in the interlayer film.

When the interlayer film contains a second dispersant in addition to a first dispersant, the content of the first dispersant is preferably larger than that of the second dispersant. When the content of the first dispersant is larger than that of the second dispersant, a colorant such as a pigment or another substance is likely to be appropriately dispersed.

Specifically, the mass-based ratio of the content of the second dispersant to the content of the first dispersant (second dispersant/first dispersant) is preferably 1/100 or more and 30/100 or less. Such a content ratio makes it easy to appropriately disperse a particulate substance such as a pigment in the interlayer film.

The ratio (second dispersant/first dispersant) is more preferably 1/100 or more and 25/100 or less, even more preferably 7/100 or more and 20/100 or less, still even more preferably 10/100 or more and 20/100 or less.

The first dispersant and the second dispersant are preferably contained in the region 11 (first middle layer) having a high dispersant content. The mass-based ratio of the content of the second dispersant to the content of the first dispersant (second dispersant/first dispersant) in the region 11 is also preferably adjusted to fall within the above range.

The dispersant may be a commercially-available product. Preferred examples of the commercially-available product include "DISPERBYK-102", "DISPERBYK-185", "DISPERBYK-190", "DISPERBYK-193", "DISPERBYK-199", "DISPERBYK-2009", "DISPER BYK-160" "DISPERBYK-2001", "DISPERBYK-2000", "DISPERBYK-21116", "DISPERBYK-110", "DISPERBYK-111", and "DISPERBYK-180" manufactured by BYK.

Other examples include "EFKA-44", "EFKA-46", "EFKA-47", "EFKA-48", "EFKA-4050", "EFKA-4020", "EFKA-4060", "EFKA-4406", "EFKA-4800", and "EFKA-1101" manufactured by BASF. Other examples include "NBZ-4204/10" manufactured by Lubrizol, "Hinoact KF-1M", "Hinoact T-6000", "Hinoact T-7000", "Hinoact T-8000", "Hinoact T-8350P", "Hinoact T-8000E", "KF-1000", "AJISPERPB-821", "AJISPERPB-822", "AJISPERPB-823", and "AJISPERPA-111" manufactured by Kawaken Fine Chemicals Co., Ltd, "FLOWLEN DOPA-33BHF" and "FLOWLEN DOPA-44BHF" manufactured by Kyoeisha Chemical Co., Ltd, and "Solsperse 20000", "Solsperse 22000", "Solsperse 24000", "Solsperse 27000", "Solsperse 28000", "Solsperse 41000", "Solsperse 41090", "Solsperse 43000", "Solsperse 44000", "Solsperse 46000", "Solsperse 5000", and "Solsperse 2200" manufactured by Avecia.

Other examples include "DISPARLON DA-234", "DISPARLON DA-325", "DISPARLON DA-375", and "DISPARLON DA-725" manufactured by Kusumoto Chemicals, Ltd., and "TEGODispers670", "TEGODispers740W", "TEGODispers750W", "TEGODispers755W", "TEGODisperse757W", and "TEGODispers760" manufactured by Evonik. Other examples include "OLOA-1200" manufactured by Chevron, "S-900" manufactured by Nidwin Cooper, USA, and "NEWPOL PE61", "NEWPOL PE64", "NEWPOL PE74", and "NEWPOL PE75" manufactured by Sanyo Chemical Industries, Ltd. These dispersants mentioned above as examples are preferably used as a first dispersant.

### <Colorant>

As described above, the interlayer film of the present invention preferably contains a colorant. The colorant to be used is not limited, and any coloring matter conventionally added to interlayer films for laminated glass can be used, such as blue, yellow, red, green, purple, black, or white coloring matter. The coloring matter may be a pigment or a dye. When a colorant is used for the interlayer film, a laminated glass can be colored and the aesthetic quality of the interlayer film can be enhanced. In the present invention, the colorant is preferably a pigment. When a pigment is used in the present invention, the colorant can more effectively be dispersed in the interlayer film by the dispersant described above.

Examples of the pigment include a copper phthalocyanine-based pigment such as pigment blue, a phthalocyanine-based pigment such as a cobalt phthalocyanine pigment, an azo-based pigment such as a nickel complex azo-based pigment, an anthraquinone-based pigment, a perylene pigment, a diketopyrrolopyrrole-based pigment, a quinacridone-based pigment, a perinone-based pigment, a thioindigo-based pigment, an isoindoline-based pigment, an isoindolinone-based pigment, a quinophthalone-based pigment, a threne-based pigment, a titanium oxide-based pigment, and a carbon-based material such as carbon black such as pigment black 7, graphene, or carbon nanotubes.

Examples of the dye include an azo dye, a cyanine dye, a triphenylmethane dye, a phthalocyanine dye, an anthraquinone dye, a naphthoquinone dye, a quinonimine dye, a methine dye, an azomethine dye, a squarylium dye, an acridine dye, a styryl dye, a coumarin dye, a quinoline dye, and a nitro dye. The dye may be a dispersive dye.

Among the above pigments, preferred are carbon black, a phthalocyanine-based pigment, and a perylene pigment because they have a high affinity for the thermoplastic resin and are less likely to bleed out. Preferred dyes are an azo dye and an anthraquinone-based dye.

As the colorant, one colorant may be used singly or two or more colorants may be used in combination.

The pigment or the dye constituting the colorant may directly be added to a resin composition for forming each layer, but may be converted to ink, toner, or the like before added to the resin composition. In such a case, the content of the colorant means the content of the pigment or the dye itself. Further, the colorant may be dispersed in a plasticizer before added to the resin composition. More specifically, before being mixed with a resin, a colorant may be dispersed in a plasticizer by adding the colorant to the plasticizer and further adding a dispersant thereto.

When the interlayer film contains a colorant, the colorant is preferably contained in the region 11 (first middle layer) having a high dispersant content. In such a mode, the colorant can appropriately be dispersed by the dispersant. The content of the colorant in the region 11 (first middle layer) is preferably 0.005 mass% or more and 2.0 mass% or less. When the content of the colorant is equal to or more than the above lower limit, the interlayer film can appropriately be colored to enhance the aesthetic quality of the interlayer film. Further, when the content of the colorant is equal to or less than the above upper limit, the interlayer film can appropriately be colored without impairing the transparency and mechanical characteristics of the interlayer film. The content of the colorant in the region 11 (first middle layer) is more preferably 0.01 mass% or more and 1.5 mass% or less, even more preferably 0.02 mass% or more and 1 mass% or less, still even more preferably 0.03 mass% or more and 0.8 mass% or less.

As described above, the region 11 (first middle layer) having a high dispersant content preferably contains a dispersant and a colorant, but the mass-based ratio of the content of the dispersant to the content of the colorant in the region 11 (first middle layer) (dispersant/colorant) is preferably 20/100 or more and 100/100 or less. When the ratio (dispersant/colorant) is within the above range, the colorant is likely to be appropriately dispersed by the dispersant.

The ratio is more preferably 30/100 or more and 90/100 or less, even more preferably 50/100 or more and 85/100 or less.

The region 12 (surface layer) having a low dispersant content may or may not contain a colorant. When the region 12 having a low dispersant content contains a colorant, the content of the colorant in the region 12 is preferably 0.005 mass% or more and 0.5 mass% or less, more preferably 0.01 mass% or more and 0.1 mass% or less.

### <Metallic salt (X)>

The interlayer film preferably contains at least one metallic salt (hereinafter sometimes referred to as "metallic salt (X)") selected from the group consisting of an alkali metal salt, an alkaline-earth metal salt, and a magnesium salt. The metallic salt (X) is generally used as an adhesive force adjuster. When the interlayer film contains a metallic salt (X), adhesive force between the interlayer film and a laminated glass member is controlled so that a pummel value is likely to be adjusted to fall within the above-described desired range. This makes it easy to obtain a laminated glass that has excellent penetration resistance and is less likely to cause separation between the interlayer film and the laminated glass member.

The metallic salt (X) preferably contains at least one metal selected from among K (potassium) and Mg (magnesium). The metallic salt (X) is more preferably an alkali metal salt of an organic acid having 2 to 16 carbon atoms or an alkaline-earth metal salt of an organic acid having 2 to 16 carbon atoms, even more preferably a magnesium salt of a carboxylic acid having 2 to 16 carbon atoms or a potassium salt of a carboxylic acid having 2 to 16 carbon atoms. The magnesium salt of a carboxylic acid having 2 to 16 carbon atoms and the potassium salt of a carboxylic acid having 2 to 16 carbon atoms are not limited, and examples thereof include magnesium acetate, potassium acetate, magnesium propionate, potassium propionate, magnesium 2-ethylbutyrate, potassium 2-ethylbutyrate, magnesium 2-ethylhexanoate, and potassium 2-ethylhexanoate. As the metallic salt (X), one metallic salt (X) may be used singly or two or more metallic salts (X) may be used in combination. When two or more metallic salts (X) are used in combination, magnesium acetate and magnesium 2-ethylbutyrate are preferably used in combination.

The content of the metallic salt (X) is preferably 5 ppm by mass or more and 1000 ppm by mass or less, more preferably 10 ppm by mass or more and 500 ppm by mass or less, even more preferably 20 ppm by mass or more and 200 ppm by mass or less, particularly preferably 20 ppm by mass or more and 100 ppm by mass or less in terms of the amount of a metallic element derived from the metallic salt. When the content of the metallic salt (X) is within the above range, adhesive force to a laminated glass member can appropriately be adjusted without deteriorating weatherability etc.

As described above, the interlayer film has one or more layers, and each of the layers may contain a metallic salt (X). Particularly, the metallic salt (X) is preferably contained in the region 11 (first middle layer). When each of the layers of the interlayer film contains a metallic salt (X), a preferred content of the metallic salt (X) in each of the layers is the same as the above-described preferred content of the metallic salt (X).

If necessary, the interlayer film may also contain additives (other additives) in addition to those described above, such as a heat shielding agent, an ultraviolet absorber, an antioxidant, a light stabilizer, a fluorescent whitening agent, and a crystal nucleating agent.

When the interlayer film includes two or more layers, each of the layers may contain other additives, if necessary.

### <Pummel value>

The pummel value at a water content of 0.4% of the interlayer film of the present invention is preferably 2.0 or more. When the pummel value is 2.0 or more, it is possible to prevent the occurrence of separation between the interlayer film and a laminated glass member. From the viewpoint of more appropriately preventing separation between the interlayer film and a laminated glass member, the pummel value at a water content of 0.4% is preferably 2.5 or more, more preferably 3.0 or more.

Further, the pummel value at a water content of 0.4% is preferably 7.0 or less. When the pummel value at a water content of 0.4% is 7.0 or less, a steel ball is less likely to penetrate a laminated glass in a falling ball test, that is, excellent penetration resistance is likely to be achieved. From the viewpoint that excellent penetration resistance is likely to be maintained, the pummel value at a water content of 0.4% is more preferably 6.0 or less, even more preferably 5.5 or less, still even more preferably 5.0 or less.

The pummel value at a water content of 1.5% of the interlayer film of the present invention is preferably 3.0 or more. When the pummel value is 3.0 or more, it is possible to prevent the occurrence of separation between the interlayer film and a laminated glass member when the water content increases to about 1.5%. From the viewpoint of more appropriately preventing separation between the interlayer film and a laminated glass member, the pummel value at a water content of 1.5% is preferably 4.0 or more, more preferably 5.0 or more.

Further, the pummel value at a water content of 1.5% of the interlayer film is preferably 9.0 or less. When the pummel value is 9.0 or less, a steel ball is less likely to penetrate a laminated glass in a falling ball test, that is, excellent penetration resistance is likely to be achieved when the water content increases to about 1.5%. From the viewpoint that excellent penetration resistance is likely to be maintained, the pummel value at a water content of 1.5% is preferably 8.0 or less, more preferably 7.5 or less.

### <Visible light transmittance>

The visible light transmittance of a laminated glass produced by bonding two reference glass plates each other with the interlayer film of the present invention being interposed between them is not limited and may appropriately be adjusted depending on the intended use.

The visible light transmittance is preferably 1% or more, more preferably 5% or more, even more preferably 10% or more.

Further, the visible light transmittance is preferably 100% or less, more preferably 90% or less, even more preferably 80% or less, still even more preferably 70% or less.

It should be noted that the visible light transmittance can be measured using a clear glass plate as a reference glass plate in accordance with JIS R3212 (2015).

### <Method for producing interlayer film>

Although not limited, when having a single-layer structure, the interlayer film of the present invention may be obtained by, for example, mixing components constituting the interlayer film, such as a thermoplastic resin, a dispersant, and optional additives such as a colorant, a plasticizer, a metallic salt (X), and other additives, and subjecting the thus obtained resin composition to molding such as extrusion molding or press molding.

Here, for example, when a plasticizer and a colorant are used, from the viewpoint of enhancing the dispersibility of the colorant in the resin composition, the colorant may be added to the plasticizer together with a dispersant to be sufficiently dispersed in the plasticizer before mixed with a thermoplastic resin. When the colorant is sufficiently dispersed in the plasticizer by the dispersant before added to the resin composition, it is possible to appropriately disperse the colorant also in the interlayer film while preventing its aggregation in the interlayer film.

A method for dispersing a colorant in a plasticizer is not limited, but may be a method in which a colorant is added to a plasticizer together with a dispersant and dispersed using a dispersing device such as a bead mill, a sand mill, a roll mill, a ball mill, a jet mill, a paint shaker, a microfluidizer, a high-speed impeller, a sand grinder, a flow jet mixer, a highpressure wet micronization device, or an ultrasonic dispersing device.

Also when having a multi-layer structure, the interlayer film may be obtained by molding such as extrusion molding or press molding as in the case of a single-layer structure. Among them, extrusion molding is preferred. Particularly, coextrusion is more preferred. In the case of coextrusion, resin compositions for forming respective layers may be coextruded to form an interlayer film having a multi-layer structure.

Specifically, a resin composition for forming a region 12 (surface layer), a resin composition for forming a region 11 (first middle layer), and a resin composition for forming a second middle layer optionally provided may be prepared and coextruded to form an interlayer film having a multi-layer structure.

### <Laminated glass>

The present invention further provides a laminated glass. The laminated glass includes a first laminated glass member, a second laminated glass member, and the interlayer film interposed between the first and second laminated glass members. The first and second laminated glass members are bonded together with the interlayer film being interposed between them. One of the surfaces of the interlayer film is bonded to one of the laminated glass members and the other surface of the interlayer film is bonded to the other laminated glass member. The laminated glass may be produced by integrating the first and second laminated glass members and the above-described interlayer film interposed between them through compression bonding or the like.

### (Laminated glass member)

As the first and second laminated glass members used in the laminated glass, glass plates are used. The glass plates may be made of either inorganic glass or organic glass, but inorganic glass is preferred. Examples of the inorganic glass include, but are not limited to, clear glass, float plate glass, polished plate glass, figured glass, wire-net reinforced plate glass, wire reinforced plate glass, and green glass.

As the organic glass, one called resin glass is generally used, and examples of the organic glass include, but are not limited to, organic glasses made of resins such as polycarbonate, acrylic resins, acrylic copolymer resins, and polyesters.

The first and second laminated glass members may be made of the same material or different materials. For example, one of them may be made of inorganic glass and the other may be made of organic glass. However, both the first and second laminated glass members are preferably made of inorganic glass or organic glass.

The thickness of each of the laminated glass members is not limited, but is, for example, about 0.1 to 15 mm, preferably 0.5 to 5 mm. The thicknesses of the respective glass plates may be the same or different from each other, but are preferably the same.

The laminated glass of the present invention can be used as a window glass for various vehicles such as cars, airplanes, ships, and buildings, but is preferably used as a laminated glass for cars. The laminated glass for cars may be any one of a wind-shield glass (front glass), a side glass, a rear glass, and a roof glass.

### Examples

The present invention will be described in more detail with reference to examples, but the present invention is not at all limited by these examples.

Measurement methods and evaluation methods used in the examples are as follows.

### [Molecular weight of dispersant]

The weight-average molecular weight of a dispersant was measured by GPC (device: "APC system" manufactured by Waters, column: "ACQIUTY APC XT125-X145-XT45, 4.6 mmΦ × 150 mm each" manufactured by Waters). Further, THF was used as an eluant, RI was used as a detector, and polystyrene was used as a reference standard.

### [Thicknesses of interlayer film and its respective layers]

The thicknesses of an interlayer film and its respective layers were measured by 10-point averaging using a microscope "DSX500" manufactured by Olympus Corporation.

It should be noted that in the case of interlayer films having a taper-shaped region 11 shown in Fig. 2 to 4, the thickness of the thickest portion in the region 11 is shown in a table.

### [Pummel value]

The water contents of interlayer films obtained in Examples and Comparative Examples were adjusted to 0.4% and 1.5%. It should be noted that the interlayer films used to measure a pummel value were confirmed to have the above water content by determining a 2-point average of water contents measured in portions corresponding to central portions of a laminated glass described later by Method B -moisture vaporization method in accordance with JIS K 7251. As will be described later in Examples, laminated glasses were produced using the interlayer films whose water contents were respectively adjusted to 0.4% and 1.5% as described above.

Each of the obtained laminated glasses was left to stand at a temperature of -18°C ± 0.6°C for 16 hours, and one-half (a portion of 150 mm long × 150 mm wide) of the laminated glass was hit with a hammer with a head weight of 0.45 kg until crushed into glass fragments with a particle diameter of 6 mm or less. Then, the glass fragments separated from the interlayer film were removed, and the degree of exposure of the interlayer film caused by separation of the glass fragments from the interlayer film was measured to determine a pummel value in accordance with Table 1 shown below. The average of four measured values obtained by measuring the front and back surfaces of two laminated glass samples was used as a pummel value.

A case where the pummel value at a water content of 1.5% was larger than the pummel value at a water content of 0.4% and the pummel value at a water content of 1.5% was 3 or more and 9 or less was evaluated as "A", and other cases were evaluated as "B".

**Table 1**

| Degree of exposure of interlayer film (area%) | Pummel value |
|---|---|
| 95 < Degree of exposure ≤ 100 | 1 |
| 90 < Degree of exposure ≤ 95 | 1.5 |
| 85 < Degree of exposure ≤ 90 | 2 |
| 70 < Degree of exposure ≤ 85 | 2.5 |
| 60 < Degree of exposure ≤ 70 | 3 |
| 50 < Degree of exposure ≤ 60 | 3.5 |
| 40 < Degree of exposure ≤ 50 | 4 |
| 30 < Degree of exposure ≤ 40 | 4.5 |
| 20 < Degree of exposure ≤ 30 | 5 |
| 15 < Degree of exposure ≤ 20 | 5.5 |
| 10 < Degree of exposure ≤ 15 | 6 |
| 7.5 < Degree of exposure ≤ 10 | 6.5 |
| 5 < Degree of exposure ≤ 7.5 | 7 |
| 3.5 < Degree of exposure ≤ 5 | 7.5 |
| 2 < Degree of exposure ≤ 3.5 | 8 |
| 1 < Degree of exposure ≤ 2 | 8.5 |
| 0 ≤ Degree of exposure ≤ 1 | 9 |

### [Visible light transmittance]

The visible light transmittance of a laminated glass was measured with an ultraviolet-visible-infrared spectrophotometer U4150 (manufactured by Hitachi High-Tech Corporation) in accordance with JIS R3212, and the average of visible light transmittances at 400 to 780 nm was determined.

It should be noted that the laminated glass was produced in the following manner. Specifically, an interlayer film was obtained by a method described in each of Examples and Comparative Examples and was then sandwiched between two sheets of clear glass to obtain a laminate. The obtained laminate was subjected to preliminary compression bonding using a heating roll at 170°C. The laminate subjected to preliminary compression bonding was subjected to compression bonding using an autoclave under conditions of 140°C and a pressure of 1.3 MPa for 20 minutes to produce a laminated glass. As the clear glass, clear glass (visible light transmittance: 90.4%, manufactured by Central Glass Co., Ltd.) complying with JIS R3202 (2011) was used.

It should be noted that components used in Examples and Comparative Examples are as follows.
(1) Resins
   PVB1: Polyvinyl butyral resin, degree of acetalization 69 mol%, amount of hydroxyl groups 30 mol%, degree of acetylation 1 mol%, average degree of polymerization of PVA used for synthesis 1700
   PVB2: Polyvinyl butyral resin, degree of acetalization 64 mol%, amount of hydroxyl groups 24 mol%, degree of acetylation 12 mol%, average degree of polymerization of PVA used for synthesis 3000
(2) Plasticizer
   3GO: Triethylene glycol di-2-ethylhexanoate
(3) Pigments
   PR209: Pigment red 209 (CAS No. 3573-01-1), quinacridone-based pigment, red pigment
   PY150: Pigment yellow 150 (CAS No. 68511-62-6), nickel complex azo-based pigment
   PB15-3: Pigment blue 15-3 (CAS No. 147-14-8), copper phthalocyanine-based pigment
   PBla7: Pigment black 7 (CAS No. 1333-86-4), carbon black pigment
(4) Dispersants
   Dispersant a: "DISPERBYK-2009" manufactured by BYK, acrylic block copolymer, basic, weight-average molecular weight: 3000
   Dispersant b: "ANTI-TERRA-204" manufactured by BYK, polyaminoamide polycarboxylic acid salt
(5) Metallic salt (X)
   Mg salt: 50:50 (mass ratio) Mixture of magnesium 2-ethylbutyrate and magnesium acetate

### [Example 1]

### (Production of interlayer film)

A resin composition X for forming a region 12 (surface layer) having a low dispersant content and a resin composition Y for forming a region 11 (first middle layer) having a high dispersant content were prepared in accordance with formulations shown in Table 2. The resin composition X, the resin composition Y, and the resin composition X were coextruded in this stacking order by a coextrusion machine while the thickness of the first middle layer was adjusted to gradually decrease from one end toward the other end. In this way, an interlayer film having a taper-shaped region 11 shown in Fig. 2 was obtained.

### (Production of laminated glass)

Two sheets of clear glass were prepared, each of which had a size of 300 mm long × 150 mm wide × 2.5 mm thick. As the clear glass, clear glass (visible light transmittance 90.4%, manufactured by Central Glass Co., Ltd.) complying with JIS R3202 (2011) was used. The interlayer film obtained above was maintained under humidity-controlled conditions of 23°C and 23% RH for 12 hours (0.4%) or 50°C and 95% RH for 20 minutes (1.5%) and was then confirmed to have a water content of 0.4% or 1.5%. Then, the interlayer film was sandwiched between the two sheets of clear glass to obtain a laminate. The obtained laminate was subjected to preliminary compression bonding using a heating roll at 170°C. The laminate subjected to preliminary compression bonding was subjected to compression bonding using an autoclave under conditions of 140°C and a pressure of 1.3 MPa for 20 minutes to produce a laminated glass. The pummel value of the obtained laminated glass was measured and evaluated.

### [Example 2]

In the same manner as in Example 1, an interlayer film having a taper-shaped region 11 shown in Fig. 3 was obtained and a laminated glass was produced. The position of the region 11 in the interlayer film is different from that in Example 1, that is, the region 11 is positioned nearer to one of the surfaces of the interlayer film.

### [Example 3]

A resin composition X for forming a region 12 (surface layer) having a low dispersant content and a resin composition Y for forming a region 11 (first middle layer) having a high dispersant content were prepared in accordance with formulations shown in Table 2. Further, a resin composition Z for forming a second middle layer was prepared.

The resin composition Z is a composition containing 100 parts by mass of PVB2 and 60 parts by mass of 3GO as a plasticizer.

The resin composition X, the resin composition Y, the resin composition X, the resin composition Z, and the resin composition X were coextruded in this stacking order by a coextrusion machine while the thickness of the first middle layer was adjusted to gradually decrease from one end toward the other end. In this way, an interlayer film having a taper-shaped region 11 shown in Fig. 4 was obtained. In the same manner as in Example 1, a laminated glass was obtained using the obtained interlayer film, and the pummel value thereof was measured and evaluated.

### [Examples 4 to 7 and 12]

A resin composition X for forming a region 12 (surface layer) having a low dispersant content and a resin composition Y for forming a region 11 (first middle layer) having a high dispersant content were prepared in accordance with formulations shown in Table 2 or 3. The resin composition X, the resin composition Y, and the resin composition X were coextruded in this stacking order by a coextrusion machine to obtain a three-layered interlayer film shown in Fig. 1. In the same manner as in Example 1, a laminated glass was obtained using the obtained interlayer film, and the pummel value thereof was measured and evaluated.

### [Examples 8 to 11]

A resin composition X for forming a region 12 (surface layer) having a low dispersant content and a resin composition Y for forming a region 11 (first middle layer) having a high dispersant content were prepared in accordance with formulations shown in Table 3. Further, a resin composition Z for forming a second middle layer 13 was prepared.

The resin composition Z is a composition containing 100 parts by mass of PVB2 and 60 parts by mass of 3GO as a plasticizer.

The resin composition X, the resin composition Y, the resin composition Z, the resin composition Y, and the resin composition X were coextruded in this stacking order by a coextrusion machine to obtain a five-layered interlayer film shown in Fig. 5. In the same manner as in Example 1, a laminated glass was obtained using the obtained interlayer film, and the pummel value thereof was measured and evaluated.

### [Comparative Examples 1 to 7]

A resin composition for forming a surface layer and a resin composition for forming a middle layer were prepared in accordance with formulations shown in Table 4.

The resin composition for forming a surface layer, the resin composition for forming a middle layer, and the resin composition for forming a surface layer were coextruded in this stacking order by a coextrusion machine. In this way, as shown in Fig. 6, a three-layered interlayer film was obtained in which a surface layer 14, a middle layer 15, and a surface layer 14 were stacked in this order. In the same manner as in Example 1, a laminated glass was obtained using the obtained interlayer film, and the pummel value thereof was measured and evaluated.

**Table 2**

| | | | | | Example 1 | Example 2 | Example 3 | Example 4 | Example 5 | Example 6 |
|---|---|---|---|---|---|---|---|---|---|---|
| Surface layer (Region 12) | Resin | | Type | - | PVB1 | PVB1 | PVB1 | PVB1 | PVB1 | PVB1 |
| | | | Content | parts by mass | 100 | 100 | 100 | 100 | 100 | 100 |
| | Plasticizer | | Type | - | 3GO | 3GO | 3GO | 3GO | 3GO | 3GO |
| | | | Content | parts by mass | 40 | 40 | 40 | 40 | 40 | 40 |
| | Pigment | 1 | Type | - | - | - | - | - | - | - |
| | | | Content | wt% | 0 | 0 | 0 | 0 | 0 | 0 |
| | | 2 | Type | - | - | - | - | - | - | - |
| | | | Content | wt% | 0 | 0 | 0 | 0 | 0 | 0 |
| | | 3 | Type | - | - | - | - | - | - | - |
| | | | Content | wt% | 0 | 0 | 0 | 0 | 0 | 0 |
| | | 4 | Type | - | - | - | - | - | - | - |
| | | | Content | wt% | 0 | 0 | 0 | 0 | 0 | 0 |
| | | Total | | wt% | 0 | 0 | 0 | 0 | 0 | 0 |
| | Dispersant | | Content | wt% | 0 | 0 | 0 | 0 | 0 | 0 |
| | Thickness | One surface layer | | µm | 70 | 40 | 70 | 40 | 40 | 40 |
| | | The other surface layer | | µm | 580 | 610 | 480 | 40 | 40 | 40 |
| First middle layer (Region 11) | Resin | | Type | - | PVB1 | PVB1 | PVB1 | PVB1 | PVB1 | PVB1 |
| | | | Content | parts by mass | 100 | 100 | 100 | 100 | 100 | 100 |
| | Plasticizer | | Type | - | 3GO | 3GO | 3GO | 3GO | 3GO | 3GO |
| | | | Content | parts by mass | 40 | 40 | 40 | 40 | 40 | 40 |
| | Pigment | 1 | Type | - | PY150 | PY150 | PR209 | PB15-3 | PR209 | PR209 |
| | | | Content | wt% | 0.114 | 0.114 | 0.104 | 0.006 | 0.010 | 0.035 |
| | | 2 | Type | - | PR209 | PR209 | PB15-3 | PBla7 | PB15-3 | PB15-3 |
| | | | Content | wt% | 0.332 | 0.332 | 0.075 | 0.009 | 0.007 | 0.017 |
| | | 3 | Type | - | PB15-3 | PB15-3 | PBla7 | - | PBla7 | PBla7 |
| | | | Content | wt% | 0.234 | 0.234 | 0.199 | 0.000 | 0.017 | 0.040 |
| | | 4 | Type | - | - | - | - | - | - | - |
| | | | Content | wt% | 0 | 0 | 0 | 0 | 0 | 0 |
| | | Total | | wt% | 0.680 | 0.680 | 0.379 | 0.015 | 0.034 | 0.092 |
| | Dispersant | 1 | Type | - | a | a | a | a | a | a |
| | | | Content | wt% | 0.416 | 0.416 | 0.253 | 0.009 | 0.022 | 0.062 |
| | | 2 | Type | - | b | b | b | b | b | b |
| | | | Content | wt% | 0.050 | 0.050 | 0.036 | 0.001 | 0.003 | 0.009 |
| | | Total | | wt% | 0.466 | 0.466 | 0.289 | 0.010 | 0.025 | 0.072 |
| | Metallic species | | Type | - | Mg | Mg | Mg | Mg | Mg | Mg |
| | | | Content | ppm | 60 | 40 | 40 | 45 | 45 | 45 |
| | Thickness | | | µm | 150 | 150 | 150 | 700 | 700 | 700 |
| Second middle layer | Present/Absent | | | | Absent | Absent | Present | Absent | Absent | Absent |
| | Thickness | | | µm | 0 | 0 | 100 | 0 | 0 | 0 |
| Whole (Interlayer film) | Thickness | | | µm | 800 | 800 | 800 | 780 | 780 | 780 |
| | Visible light transmittance Tv | | | % | 4.6 | 4.6 | 1.6 | 34.7 | 17.1 | 1.6 |
| | Layer configuration | | | | Fig. 2 | Fig. 3 | Fig. 4 | Fig. 1 | Fig. 1 | Fig. 1 |
| Evaluation | Pummel value | Water content 0.4% | | | 3.3 | 4.6 | 4.6 | 4.5 | 4.5 | 4.5 |
| | | Water content 1.5% | | | 6.3 | 7.9 | 7.9 | 7.3 | 7.3 | 7.3 |
| Evaluation result | | | | | A | A | A | A | A | A |

**Table 3**

| | | | | | Example 7 | Example 8 | Example 9 | Example 10 | Example 11 | Example 12 |
|---|---|---|---|---|---|---|---|---|---|---|
| Surface layer (Region 12) | Resin | | Type | - | PVB1 | PVB1 | PVB1 | PVB1 | PVB1 | PVB1 |
| | | | Content | parts by mass | 100 | 100 | 100 | 100 | 100 | 100 |
| | Plasticizer | | Type | - | 3GO | 3GO | 3GO | 3GO | 3GO | 3GO |
| | | | Content | parts by mass | 40 | 40 | 40 | 40 | 40 | 40 |
| | Pigment | 1 | Type | - | - | PB15-3 | PR209 | PR209 | PR209 | - |
| | | | Content | wt% | 0 | 0.006 | 0.010 | 0.035 | 0.022 | 0 |
| | | 2 | Type | - | - | PBla7 | PB15-3 | PB15-3 | PB15-3 | - |
| | | | Content | wt% | 0 | 0.009 | 0.007 | 0.017 | 0.016 | 0 |
| | | 3 | Type | - | - | - | PBla7 | PBla7 | PBla7 | - |
| | | | Content | wt% | 0 | 0.000 | 0.017 | 0.040 | 0.043 | 0 |
| | | 4 | Type | - | - | - | - | - | - | - |
| | | | Content | wt% | 0 | 0 | 0 | 0 | 0 | 0 |
| | | Total | | wt% | 0 | 0.015 | 0.034 | 0.092 | 0.081 | 0 |
| | Dispersant | | Content | wt% | 0 | 0 | 0 | 0 | 0 | 0 |
| | Thickness | One surface layer | | µm | 40 | 60 | 60 | 60 | 60 | 40 |
| | | The other surface layer | | µm | 40 | 60 | 60 | 60 | 60 | 40 |
| First middle layer (Region 11) | Resin | | Type | - | PVB1 | PVB1 | PVB1 | PVB1 | PVB1 | PVB1 |
| | | | Content | parts by mass | 100 | 100 | 100 | 100 | 100 | 100 |
| | Plasticizer | | Type | - | 3GO | 3GO | 3GO | 3GO | 3GO | 3GO |
| | | | Content | parts by mass | 40 | 40 | 40 | 40 | 40 | 40 |
| | Pigment | 1 | Type | - | PR209 | PB15-3 | PR209 | PR209 | PR209 | - |
| | | | Content | wt% | 0.022 | 0.006 | 0.010 | 0.035 | 0.022 | 0.000 |
| | | 2 | Type | - | PB15-3 | PBla7 | PB15-3 | PB15-3 | PB15-3 | - |
| | | | Content | wt% | 0.016 | 0.009 | 0.007 | 0.017 | 0.016 | 0.000 |
| | | 3 | Type | - | PBla7 | - | PBla7 | PBla7 | PBla7 | - |
| | | | Content | wt% | 0.043 | 0.000 | 0.017 | 0.040 | 0.043 | 0.000 |
| | | 4 | Type | - | - | - | - | - | - | - |
| | | | Content | wt% | 0 | 0 | 0 | 0 | 0 | 0 |
| | | Total | | wt% | 0.081 | 0.015 | 0.034 | 0.092 | 0.081 | 0 |
| | Dispersant | 1 | Type | - | a | a | a | a | a | a |
| | | | Content | wt% | 0.054 | 0.009 | 0.022 | 0.062 | 0.054 | 0.054 |
| | | 2 | Type | - | b | b | b | b | b | b |
| | | | Content | wt% | 0.008 | 0.001 | 0.003 | 0.009 | 0.008 | 0.001 |
| | | Total | | wt% | 0.062 | 0.010 | 0.025 | 0.072 | 0.062 | 0.055 |
| | Metallic species | | Type | - | Mg | Mg | Mg | Mg | Mg | Mg |
| | | | Content | ppm | 45 | 45 | 45 | 45 | 45 | 45 |
| | Thickness | | | µm | 700 | 290 | 290 | 290 | 290 | 700 |
| Second middle layer | Present/Absent | | | | Absent | Present | Present | Present | Present | Absent |
| | Thickness | | | µm | 0 | 100 | 100 | 100 | 100 | 0 |
| Whole (Interlayer film) | Thickness | | | µm | 780 | 800 | 800 | 800 | 800 | 780 |
| | Visible light transmittance Tv | | | % | 1.6 | 34.7 | 17.1 | 1.6 | 1.6 | 87.0 |
| | Layer configuration | | | | Fig. 1 | Fig. 5 | Fig. 5 | Fig. 5 | Fig. 5 | Fig. 1 |
| Evaluation | Pummel value | Water content 0.4% | | | 4.5 | 4.5 | 4.5 | 4.5 | 4.5 | 4.5 |
| | | Water content 1.5% | | | 7.3 | 7.3 | 7.3 | 7.3 | 7.3 | 7.3 |
| Evaluation result | | | | | A | A | A | A | A | A |

**Table 4**

| | | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| Surface layer | Resin | | Type | - | PVB1 | PVB1 | PVB1 | PVB1 | PVB1 | PVB1 | PVB1 |
| | | | Content | parts by mass | 100 | 100 | 100 | 100 | 100 | 100 | 100 |
| | Plasticizer | | Type | - | 3GO | 3GO | 3GO | 3GO | 3GO | 3GO | 3GO |
| | | | Content | parts by mass | 40 | 40 | 40 | 40 | 40 | 40 | 40 |
| | Pigment | 1 | Type | - | PR209 | PR209 | PR209 | PR209 | - | - | - |
| | | | Content | wt% | 0.032 | 0.021 | 0.032 | 0.021 | 0 | 0 | 0 |
| | | 2 | Type | - | PB15-3 | PB15-3 | PB15-3 | PB15-3 | - | - | - |
| | | | Content | wt% | 0.016 | 0.015 | 0.016 | 0.015 | 0 | 0 | 0 |
| | | 3 | Type | - | PBla7 | PBla7 | PBla7 | PBla7 | - | - | - |
| | | | Content | wt% | 0.037 | 0.039 | 0.037 | 0.039 | 0 | 0 | 0 |
| | | 4 | Type | - | - | - | - | - | - | - | - |
| | | | Content | wt% | 0 | 0 | 0 | 0 | 0 | 0 | 0 |
| | | Total | | wt% | 0.084 | 0.075 | 0.084 | 0.075 | 0 | 0 | 0 |
| | Dispersant | 1 | Type | - | a | a | a | a | a | a | c |
| | | | Content | wt% | 0.057 | 0.050 | 0.057 | 0.050 | 0.062 | 0.054 | 0.070 |
| | | 2 | Type | - | b | b | b | b | b | b | - |
| | | | Content | wt% | 0.008 | 0.007 | 0.008 | 0.007 | 0.009 | 0.008 | 0 |
| | | Total | | wt% | 0.066 | 0.057 | 0.066 | 0.057 | 0.072 | 0.062 | 0.070 |
| | Thickness | One surface layer | | µm | 40 | 40 | 40 | 40 | 40 | 40 | 40 |
| | | The other surface layer | | µm | 40 | 40 | 40 | 40 | 40 | 40 | 40 |
| Middle layer | Resin | | Type | - | PVB1 | PVB1 | PVB1 | PVB1 | PVB1 | PVB1 | PVB1 |
| | | | Content | parts by mass | 100 | 100 | 100 | 100 | 100 | 100 | 100 |
| | Plasticizer | | Type | - | 3GO | 3GO | 3GO | 3GO | 3GO | 3GO | 3GO |
| | | | Content | parts by mass | 40 | 40 | 40 | 40 | 40 | 40 | 40 |
| | Pigment | 1 | Type | - | PR209 | PR209 | PR209 | PR209 | PR209 | PR209 | PR209 |
| | | | Content | wt% | 0.032 | 0.021 | 0.032 | 0.021 | 0.035 | 0.022 | 0.035 |
| | | 2 | Type | - | PB15-3 | PB15-3 | PB15-3 | PB15-3 | PB15-3 | PB15-3 | PB15-3 |
| | | | Content | wt% | 0.016 | 0.015 | 0.016 | 0.015 | 0.017 | 0.016 | 0.017 |
| | | 3 | Type | - | PBla7 | PBla7 | PBla7 | PBla7 | PBla7 | PBla7 | PBla7 |
| | | | Content | wt% | 0.037 | 0.039 | 0.037 | 0.039 | 0.040 | 0.043 | 0.040 |
| | | 4 | Type | - | - | - | - | - | - | - | - |
| | | | Content | wt% | 0 | 0 | 0 | 0 | 0 | 0 | 0 |
| | | Total | | wt% | 0.084 | 0.075 | 0.084 | 0.075 | 0.092 | 0.081 | 0.092 |
| | Dispersant | 1 | Type | - | a | a | - | - | - | - | - |
| | | | Content | wt% | 0.057 | 0.050 | 0 | 0 | 0 | 0 | 0 |
| | | 2 | Type | - | b | b | - | - | - | - | - |
| | | | Content | wt% | 0.008 | 0.007 | 0 | 0 | 0 | 0 | 0 |
| | | Total | | wt% | 0.066 | 0.057 | 0 | 0 | 0 | 0 | 0 |
| | Metallic species | | Type | - | Mg | Mg | Mg | Mg | Mg | Mg | Mg |
| | | | Content | ppm | 85 | 60 | 85 | 60 | 85 | 60 | 85 |
| | Thickness | | | µm | 700 | 700 | 700 | 700 | 700 | 700 | 700 |
| Whole (Interlayer film) | Thickness | | | µm | 760 | 760 | 760 | 760 | 760 | 760 | 760 |
| | Visible light transmittance Tv | | | % | 1.6 | 1.6 | 1.6 | 1.6 | 1.6 | 1.6 | 1.6 |
| | Layer configuration | | | | Fig. 6 | Fig. 6 | Fig. 6 | Fig. 6 | Fig. 6 | Fig. 6 | Fig. 6 |
| Evaluation | Pummel value | Water content 0.4% | | | 3.3 | 5.0 | 3.3 | 5.0 | 3.3 | 5.0 | 3.5 |
| | | Water content 1.5% | | | 1.3 | 1.5 | 1.3 | 1.5 | 1.3 | 1.5 | 1.8 |
| Evaluation result | | | | | B | B | B | B | B | B | B |

In the interlayer film of each of Examples, the surface layers contain no dispersant. Therefore, the dispersant is unevenly distributed in such a manner that its concentration is low in the outer surface of the interlayer film. This prevents a decrease in the pummel value at a water content of 1.5%. Therefore, the interlayer film of each of Examples is less likely to cause separation from a laminated glass member and has excellent performance.

On the other hand, in the interlayer film of each of Comparative Examples, the concentration of the dispersant in the outer surface is equal to or higher than that in the middle layer, and the pummel value at a water content of 1.5% is low. Therefore, the interlayer film of each of Comparative Examples is likely to cause separation from a laminated glass member and is inferior in performance to the interlayer films of Examples.

### Reference Signs List

10 Interlayer film for laminated glass
11 Region (first middle layer) having high dispersant content
12 Region (surface layer) having low dispersant content
13 Second middle layer
14 Surface layer
15 Middle layer
20 Interlayer film for laminated glass
30 Interlayer film for laminated glass
40 Interlayer film for laminated glass
50 Interlayer film for laminated glass
60 Interlayer film for laminated glass

## Claims

1. An interlayer film for laminated glass, comprising a thermoplastic resin and a dispersant,
the dispersant being unevenly distributed in such a manner that its concentration is low in an outer surface of the interlayer film for laminated glass.

2. The interlayer film for laminated glass according to claim 1, which has a region having a higher dispersant content than the outer surface.

3. The interlayer film for laminated glass according to claim 1 or 2, wherein a difference between a content of the dispersant in the region having a higher dispersant content than the outer surface and a content of the dispersant in the outer surface is 0.005 mass% or more and 5 mass% or less.

4. The interlayer film for laminated glass according to claim 1 or 2, wherein the dispersant comprises at least one selected from the group consisting of an acrylic dispersant, an amine-based dispersant, and a urethane-based dispersant.

5. The interlayer film for laminated glass according to claim 1 or 2, wherein the dispersant comprises two or more dispersants.

6. The interlayer film for laminated glass according to claim 5, wherein the dispersant comprises a first dispersant and a second dispersant having a lower molecular weight than the first dispersant, and wherein a mass-based ratio of a content of the second dispersant to a content of the first dispersant is 1/100 or more and 30/100 or less.

7. The interlayer film for laminated glass according to claim 1 or 2, wherein the dispersant comprises a dispersant having a molecular weight of 2500 or more.

8. The interlayer film for laminated glass according to claim 1 or 2, wherein a content of the dispersant is 0.001 mass% or more and 1 mass% or less.

9. The interlayer film for laminated glass according to claim 1 or 2, which further comprises a colorant.

10. The interlayer film for laminated glass according to claim 2, wherein the region having a higher dispersant content than the outer surface contains a colorant.

11. The interlayer film for laminated glass according to claim 10, wherein a mass-based ratio of a content of the dispersant to a content of the colorant in the region having a higher dispersant content than the outer surface is 20/100 or more and 100/100 or less.

12. The interlayer film for laminated glass according to claim 1 or 2, which comprises at least one metallic salt selected from the group consisting of an alkali metal salt, an alkaline-earth metal salt, and a magnesium salt.

13. A laminated glass comprising:
a first laminated glass member,
a second laminated glass member, and
the interlayer film for laminated glass according to claim 1 or 2, wherein
the interlayer film for laminated glass is interposed between the first laminated glass member and the second laminated glass member.
